(19) Europäisches Patentamt
European Patent Office
Office européen des brevets

(11) EP 1 217 099 B1

(12) EUROPÄISCHE PATENTSCHRIFT

(45) Veröffentlichungstag und Bekanntmachung des Hinweises auf die Patenterteilung:
**31.08.2005 Patentblatt 2005/35**

(51) Int Cl.[7]: **C25B 9/06**

(21) Anmeldenummer: **01129827.0**

(22) Anmeldetag: **14.12.2001**

(54) **Verfahren zur Durchführung elektrochemischer Reaktionen in einem Mikroreaktor**

Process for carrying out electrochemical reactions using a microreactor

Procédé pour réaliser des réactions électrochimiques dans un microréacteur

(84) Benannte Vertragsstaaten:
**AT BE CH CY DE DK ES FI FR GB GR IE IT LI LU MC NL PT SE TR**

(30) Priorität: **21.12.2000 DE 10064417**

(43) Veröffentlichungstag der Anmeldung:
**26.06.2002 Patentblatt 2002/26**

(73) Patentinhaber: **CPC Cellular Process Chemistry Systems GmbH**
**55130 Mainz (DE)**

(72) Erfinder: **Ziogas, Athanassios, Dr.**
**55122 Mainz (DE)**

(74) Vertreter: **Kompter, Hans-Michael et al**
**Kanzlei Heumann, Benz**
**Spessartring 63**
**64287 Darmstadt (DE)**

(56) Entgegenhaltungen:
**WO-A-98/32008**
**DE-A- 19 841 302**
**US-A- 4 652 356**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Verfahren zur Durchführung elektrochemischer Reaktionen, wobei man ein oder mehrere chemische Reaktanten in fluider Form in einen Mikroreaktor für elektrochemische Umsetzungen einleitet, welcher mindestens zwei planparallel zueinander angeordnete Elektroden aufweist, dadurch gekennzeichnet, dass mindestens eine Elektrode mit einer definiert ausgestalteten, fest mit der Elektrodenoberfläche verbundenen Isolationsschicht versehen ist.

Elektrochemische Reaktoren bzw. Zellen, bei denen der Elektrolyt zwischen den Oberflächen zweier gegenüberliegender Elektroden strömt, sind für den Einsatz bei organischen Synthesen in Lösungen mit kleiner elektrolytischer Leitfähigkeit bekannt.

F. Beck und H. Guthke beschreiben zum Beispiel in Chemie-Ingenieur-Technik, Heft 17, 1969, Jahrgang, Seiten 943-950 bzw. US 4,406,768 eine Kapillarspalt-Zelle, bei der kreisförmige Platten bipolar in Serie geschaltet sind. Der Elektrolyt wird durch eine Bohrung in der Mitte der kreisförmigen Platten eingeführt. Die Reaktionsmischung strömt radial zwischen den Elektroden hindurch, rieselt an der Außenseite des Elektrodenstapels herab und wird einem externen Kühler zugeleitet.

Diese Kapillarspalt-Zelle weist folgende Nachteile auf:

Aufgrund der radialen Fluidführung ist die Strömungsgeschwindigkeit Innen verschieden zu Außen. Dadurch erfolgt Querdiffusion, eine ungünstigere Verweilzeitverteilung und damit verschlechterte Selektivität. Zudem tritt durch großflächige "Spacer" ein Verlust an effektiver Elektrodenoberfläche auf, wodurch ein ungünstigeres Verhältnis von effektiver Elektrodenoberfläche zu Zellvolumen entsteht.

Weiterhin hat der große Elektrodenabstand zur Folge, dass entweder viel Leitsalz zugesetzt werden muss oder ein hoher ohmscher Widerstand überwunden werden muss. Dadurch entsteht hoher ohmscher Energieverlust und geringe Stromausbeute.

Zudem ist keine direkte Wärmeübertragung in der elektrochemischen Zelle möglich, also dort, wo eine Wärmezu- bzw. -abfuhr benötigt wird.

Die deutsche Patentanmeldung DE 25 02 840 und die Internationale Patentanmeldung WO 00/15872 schlagen elektrochemische Zellen vor, bei denen zwischen planparallelen Elektroden durch nicht-leitende Abstandhalter, insbesondere Folien, Spalten bzw. Kanäle gebildet werden, in denen die elektrochemische Umsetzung stattfinden soll:

Diese Zellen weisen folgende Nachteile auf:

- Komplizierte und umständliche Fertigung des Reaktors, da das Strukturieren und Positionieren einer Folie zwischen zwei Platten in einem gesonderten Fertigungsschritt notwendig ist.
- Schwierige Handhabung der sehr dünnen Folie; da diese nicht fest mit den Elektroden verbunden ist, wodurch ein Verrutschen und Beschädigung der Folie möglich ist. In der Folge können Schatten, Feldinhomogenitäten und Veränderungen der Kanalgeometrien und unterschiedliche Verweilzeiten auftreten. Auch verschlechtert sich dadurch die Selektivität. Im Extremfall besteht die Gefahr eines Kurzschlusses. Zudem können sehr leicht Undichtigkeiten auftreten.

Der Erfindung liegt die Aufgabe zugrunde, ein Verfahren für elektrochemische Umsetzungen in einem Mikroreaktorsystem zu shaffen.

Der im erfindungsgemäßen Verfahren verwendete Mikroreaktor soll hohe Selektivität bei gleichzeitig hoher effektiver Elektrodenoberfläche erzielen, wobei man einen höheren Stoffumsatz bei gleichbleibender Stromdichte erhält. Dadurch können im Betrieb höhere Ausbeuten, weniger unerwünschte Nebenprodukte und damit geringerer Aufwand zu deren Trennung und Entsorgung erzielt werden.

Zudem wird eine hohe Stromausbeute sowie ein einfacher und effektiver Wärmeaustausch gefordert; der Reaktor soll aufgrund der Verwendung nur weniger Elemente und einfacher Bearbeitung einfach und kostengünstig zu fertigen sein und einen möglichst geringen, aber exakt definierten und konstanten Elektrodenabstand aufweisen.

Die gestellte Aufgabe wird aufgrund der Merkmale des Anspruchs 1 gelöst und durch die weiteren Merkmale der Unteransprüche ausgestaltet und weiterentwickelt.

Zur Durchführung elektrochemischer Reaktionen mit Hilfe des erfindungsgemäßen Mikroreaktors dient ein definiert ausgestaltete Verbund aus Elektrodenoberfläche und Beschichtung gleichzeitig als Abstandhalter zwischen den Elektroden, zur genauen Definition eines Reaktionsraumes und als Isolator zwischen den Elektroden.

Im einzelnen werden Reaktionsräume für elektrochemische Reaktionen gebildet, die sich im Hinblick auf die durchzuführende elektrochemische Prozessführung geeignet zusammenstellen lassen und miteinander verbunden werden können. Mit wenigen unterschiedlichen Funktionseinheiten können Mikroreaktoren zusammengestellt werden, die einer Vielzahl von Anforderungen genügen. Soll beispielsweise die Ausbringungsmenge erhöht werden, so können mehrere identische Funktionseinheiten so gestapelt werden, das eine Vielzahl paralleler Reaktionsräume mit lediglich einer Zu- bzw. Abfuhr entsteht. Soll hingegen eine verlängerte Reaktionszeit erzielt werden, so können identische

Funktionseinheiten auch so kombiniert werden; dass eine Serie von:identischen Reaktionsräumen entsteht. Die modulare Bauweise ermöglicht einen äußerst flexiblen Aufbau und dadurch die einfache Anpassung an die jeweils auftretenden Bedingungen auch wechselnder Art, indem einzelne Elemente des Mikroreaktors austauschbar sind, um den Erfordernissen der gewählten Reaktion zu genügen oder wenn sich die erhofften Ergebnisse nicht einstellen oder wenn Defekte auftreten.

Durch Austausch von Komponenten kann man die Fluidführung schließlich so dimensionieren, dass sich eine verbesserte Temperaturführung der Reaktionen einstellt, und/oder dass eine höhere Selektivität und eine verringerte Bildung unerwünschter Nebenprodukte beobachtet wird, d. h. dass man das erwünschte Produkt mit weniger Verunreinigungen erhält.

Die Dimensionen und Formgebung des erfindungsgemäßen Mikroreaktors sind an sich unkritisch. Definitionsgemäß ist bei einem elektrochemischen Mikroreaktor der Abstand zwischen Anode und Kathode kleiner als 1 mm.

Die einzelnen Elektroden, Platten oder Schichten können in jeder geometrischen Form vorliegen. Vorzugsweise sind sie rund, oval, quadratisch oder rechteckig. Quadratische oder rechteckige Elektroden und Platten sind im Hinblick auf ihre Positionierbarkeit besonders bevorzugt.

1. Von grundlegender Bedeutung für richtiges Funktionieren eines Mikroreaktors ist die Ausbildung von elektrisch isolierenden Abstandshaltern zwischen den Elektrodenoberflächen. Bei dem erfindungsgemäßen Mikroreaktor wird zu diesem Zweck mindestens eine gegebenenfalls zuvor speziell strukturierte Elektrodenoberfläche entweder durch gezieltes Auftragen einer Isolationsschicht über eine Maske auf oder durch gezieltes Entfernen von Teilen einer zuvor flächendeckend auf mindestens eine gegebenenfalls zuvor speziell strukturierte Elektrodenoberfläche aufgebrachten und mit ihr fest verbundenen, isolierenden und dichtenden Beschichtung mindestens ein Reaktionsraum definiert.

Besonders bevorzugt sind folgende Ausführungsformen:

(A) Mikroreaktoren umfassend

a. mindestens eine Arbeitselektrode (2);
b. mindestens eine Gegenelektrode (3);
c. Vorrichtungen zum Zu- und Abführen (4, 4', 7, 7', 9, 9') von Reaktanten und Produkten.

(B) Mikroreaktoren, wobei die isolierende Beschichtung (8) der beschichteten Elektrode (2) an einer oder mehreren Stellen (5), die mit den Vorrichtungen (c) in Verbindung stehen, entfernt ist.

(C) Mikroreaktoren, wobei die beschichtete Elektrode

a. mindestens eine Rinne (4) zur Verteilung des Edukts; und
b. mindestens eine Rinne (4') zum Sammeln des Produkts; sowie
c. mindestens eine die beiden Rinnen (4,4') verbindende Rinne oder strukturierte Fläche (5) aufweist, und wobei

die Bereiche (i) und (ii) vollständig beschichtet sind, und im Bereich (iii) die Oberfläche der Elektrode teilweise freigelegt ist.

(D) Mikroreaktoren, wobei die Beschichtung im Bereich (iii) so ausgestaltet ist, dass ein die beiden Rinnen (4, 4') verbindender Raum (5) entsteht, auf der an mehreren Stellen Abstandhalter (6) ausbildende Teile der Beschichtung vorhanden sind, wobei insbesondere die Form der Abstandhalter (6) zur Optimierung der Strömungsverteilung entsprechend gestaltet wird.

(E) Mikroreaktoren, wobei mindestens eine der Elektroden mit einem Wärmetauscher (12) oder einem Peltierelement versehen ist.
Zur gezielten Einstellung der Reaktionstemperatur kann jede Elektrode mit einem oder auch einem zweiten Temperierelement, beispielsweise einem Wärmetauscher oder einem Peltierelement, versehen werden. Die Elektrodenrückseite bildet dabei stets eine der Wände des Wärmetauschers.

Die Wärmetauscherstrukturen können gegebenenfalls in die Rückseiten der Platten eingearbeitet sein, auf deren Vorderseite die Strukturen für die Führung des Reaktionsmediums eingearbeitet sind. In diesem Fall kann auf eine Strukturierung der anliegende Platte verzichtet werden. Aufgrund der kleinen Elektrodenabstände und des dementsprechend hohen Verhältnisses von Oberflächen zu Volumen wird eine schnelle Wärmeübertragung und damit die Vermeidung des Auftretens starker Temperaturunterschiede in der Reaktionslösung ermöglicht. Der Einsatz von Sensoren zur Temperaturmessung zur exakten Kontrolle der Reaktionstemperatur ist vorgesehen. Das Temperieren der Reaktionszelle ist in einem Bereich von -80 bis +300 °C möglich.

Als Material für die Wärmeaustauscher kommen Metall (Edelstahl), Glas, Keramik, Halbleitermaterial, insbesondere auf der Basis von Silizium, sowie Kunststoffe in Betracht. Die Auswahl dieser Werkstoffe oder von Kombinationen davon richtet sich nach dem vorgesehenen Verwendungszweck. Ganz besonders bevorzugt ist Edelstahl.

(F) Mikroreaktoren, wobei Anoden- und Kathodenraum durch Einbringen einer Trennwand (15) voneinander getrennt sind.
Die Konstruktion der Elektrodenoberflächen erlaubt die einfache Einbringung einer Trennwand (Diaphragma, (Ionenaustauscher-)Membran) zwischen den Elektroden ohne hohen technischen und wirtschaftlichen Aufwand. Diese erlaubt den diffusiven Transport oder den Austausch lediglich einiger Bestandteile des Anolyten bzw. des Katholyten, während andere zurückgehalten werden:
Zwei beschichtete und strukturierte Elektroden werden umgekehrt aufeinandergelegt und eine Trennwand so dazwischen positioniert, dass der solche entstehende Reaktionsraum in einen Anoden- und einen Kathodenraum geteilt wird (siehe Fig. 3).

(G) Mikroreaktoren, wobei die isolierte Beschichtung (8) eine Höhe von weniger als 100 μm, vorzugsweise 25 bis 75 μm, insbesondere etwa 50 μm aufweist.
Sind die Abstände zwischen zwei Elektroden groß und die Transportwege zwischen ihnen lang, verlaufen diffusionskontrollierte Reaktionen dementsprechend langsam. Der erfindungsgemäße Reaktor mit Fluidschichtdicken ≤ 100 μm löst dieses Problem, da aufgrund des kleinen Elektrodenabstandes der Abstand der Diffusionsgrenzschichten kleingehalten wird und dementsprechend die Reaktion beschleunigt wird.
Für viele Elektrolytsysteme überlappen die Diffusionsgrenzschichten von Anode und Kathode bei Elektrodenabständen im μm- Bereich. Hierdurch wird der Anteil des Elektrolyten am Gesamtwiderstand eliminiert. Der Gesamtwiderstand setzt sich dann im wesentlichen nur noch aus den Widerständen der Diffusionsgrenzschichten von Anode und Kathode und den Reaktionswiderständen zusammen. Wenn der Abstand der Elektroden kleiner ist als die Dicke der Diffusionsgrenzschichten, sinkt der Diffusionswiderstand und steigt die Diffusionsgeschwindigkeit und damit die Reaktionsgeschwindigkeit diffusionskontrollierter Reaktionen. Dies erlaubt den Einsatz von Elektrolytsystemen mit geringer Leitsalzkonzentration oder völligen Verzicht auf Leitsalz.

Dies ist insbesondere bei Systemen mit kleiner elektrolytischer Leitfähigkeit, beispielsweise organischen Lösungsmitteln in der elektroorganischen Synthese, von enormem Vorteil. Vorteilhaft können daher ohmsche Wärmeverluste und damit das Auftreten unerwünschter Neben- oder Folgereaktionen vermindert werden sowie Einsparungen durch geringeren Energieverbrauch, durch niedrige Leitsalzkonzentrationen und die dadurch resultierende niedrige Leitsalztrennkosten erzielt werden.

(H) Mikroreaktoren, wobei die Elektroden monopolar oder bipolar geschaltet sein können.
Durch den Einbau zusätzlicher Platten können Stapel von Elektroden, Wärmetauschereinheiten und Diaphragmen in beliebiger Kombination erzeugt werden.
In einer zusätzlichen Ausführungsform werden an der Ober- und Unterseite strukturierte Platten verwendet. In diesem Fall können die Elektrodenrückseiten z.B. gleichzeitig als Wärmetauscher fungieren.
Die Elektroden des erfindungsgemäßen Mikroreaktors werden von einer Stromquelle mit Strom versorgt. Für eine gute Verbindung der Elektroden mit der Stromquelle sind Materialien mit sehr guter elektrischer Leitfähigkeit wie Kupfer oder Kupferlegierungen (Messing) besonders geeignet, da der ohmsche Widerstand in elektrischen Stromkreisen durch solche Materialien extrem klein gehalten wird.
Besonders vorteilhaft wirkt die Reaktionsraumgestaltung auf die Stromverteilung. Die zu der planaren Elektrodenoberfläche senkrecht stehende Isolierschicht grenzt den Zwischenelektrodenraum ab und eliminiert Kantenrandeinflüsse. Die Abstandhalter stehen senkrecht zu Arbeits- und Gegenelektrode, so dass zwischen den Elektroden eine vorteilhafte homogene Stromdichtenverteilung stattfindet. Diese ist eine wichtige Voraussetzung für gute Stoff- und Stromausbeuten und besonders hohe Selektivitäten.

(I) Mikroreaktoren, wobei sich die einzelnen Bestandteile in einer dichtenden Vorrichtung befinden, welches im wesentlichen aus einem Bodensegment, seitlichen Führungen und einem Deckelsegment besteht, wobei die einzelnen Segmente Öffnungen zur Zu -und Abführung von Reaktanten, Produkten und/oder Wärmetauschermedien aufweisen können.
Der Stapel der Elektroden und sonstigen Schichten oder Platten wird in der Regel von einer Vorrichtung, vorzugsweise von einem Gehäuse umschlossen, welche auch die Stromversorgung und die fluidischen Anschlüsse für die zu verarbeitenden Medien sowie die Abfuhr des erwünschten Produktes enthalten. Diese Vorrichtung selbst können als Spannvorrichtung ausgebildet sein, oder gesonderte Spannvorrichtungen sorgen dafür, dass es zur ausreichenden Flächenpressung zwischen den einzelnen Elektroden, Platten oder Schichten kommt, um deren Dichtigkeit zu gewährleisten.

Als Kathodenmaterialien können Blei, Bleilegierungen, Kadmium, Kadmiumlegierungen, Quecksilberlegierungen, Graphit, Glaskohlenstoff, Edelstahl, Platin verwendet werden. Als Anodenmaterialien kommen Platin, Graphit, Glaskohlenstoff, Nickelhydroxyperoxid, Bleidioxid, Rutheniumoxid/Titan in Frage.
Auf den Elektroden können durch galvanische Abscheidung sehr kontrolliert dünne Schichten von Metallen und Metalllegierungen aufgebracht werden. Durch diese Abscheidung kann die Oberfläche von Anode und Kathode, unabhängig voneinander, sehr kontrolliert mit unterschiedlichen Materialien modifiziert werden. Da für die Bedingungen einer elektrochemischen Umsetzung nur die Elektrodenoberfläche bestimmend ist, welche direkt mit der fluiden Phase in Kontakt tritt, kann der gesamte Reaktor so unterschiedlichen Reaktionsbedürfnissen angepasst werden. Die Schichtdicke des abgeschiedenen Metallfilms ist der Stromdichte pro Zeiteinheit direkt proportional. Man kann auf diese Weise auch den Elektrodenabstand regulieren. Die Schichten können je nach Bedarf wieder entfernt werden.

Bei der chemischen Prozessführung müssen diverse Parameter beachtet werden. Deshalb ist der Einbau von Sensoren, Reglern und Versorgungseinrichtungen in den Mikroreaktor vorgesehen, insbesondere zur Erfassung und Kontrolle der Temperatur, des Drucks, gegebenenfalls der Strömungsgeschwindigkeit, der Zellspannung, des Ladungstransfers und des Volumenstroms. Das Gehäuse weist entsprechende Durchführungen für diese Sensoren auf. Wenn möglich, werden diese Sensoren außerhalb des Mikroreaktorsystems angeordnet. Teilweise sind aber Sensoren in den Funktionsmodulen unvermeidbar. Die Sensoren sind mit Regelkreisen verbunden, um den Betriebsablauf zu steuern und zu regeln. Die entsprechende Logik kann an dem Gehäuse angebaut sein oder sich außerhalb des Gehäuses befinden.

Die Erfindung wird anhand der Zeichnung beschrieben. Dabei zeigen:

- Fig. 1a einen erfindungsgemäßen Mikroreaktor (1) bestehend aus einer Arbeits- und einer Gegenelektrode in schematischer, auseinandergezogener Darstellung;
- Fig. 1b den erfindungsgemäßen Mikroreaktor (1) in seitlicher Ansicht;
- Fig. 2a einen erfindungsgemäßen Mikroreaktor (21) bestehend aus einem Wärmetauscher, einer Arbeits- und einer Gegenelektrode in schematischer, auseinandergezogener Darstellung;
- Fig. 2b den erfindungsgemäßen Mikroreaktor (21) in seitlicher Ansicht;
- Fig. 3 einen erfindungsgemäßen Mikroreaktor (31) bestehend aus zwei Wärmetauschern, einer Trennwand, einer Arbeits- und einer Gegenelektrode in schematischer, auseinandergezogener Darstellung.

In Fig.1a ist die einfachste Anordnung eines erfindungsgemäßen elektrochemischen Reaktors (1) mit einer Arbeitselektrode (2) und einer Gegenelektrode (3) dargestellt. Während die Arbeitselektrode Bohrungen und Strukturierungen (sowie des Elektrodenmaterials als auch der aufgebrachten Isolierenden Beschichtung) aufweist, verfügt die Gegenelektrode lediglich über durchgehende Bohrungen. Der Elektrolyt, bestehend aus Lösungsmittel, den Edukten und ggf. Leitsatz, wird der Zelle durch die Zuführungsöffnung (7) zugeführt und gelangt zunächst in die Verteilungsrinne (4). Dort wird sie gleichverteilt und gelangt anschließend in den zwischen der Anode und der Kathode liegenden Reaktionsraum (5) mit den Abstandhaltern (6). Im Reaktionsraum (5) werden die Reaktanten an den Elektrodenoberflächen zu den Produkten umgesetzt. Das Reaktionsgemisch wird anschließend in einer Ableitungsrinne (4') gesammelt und verlässt die Zelle durch die Abführungsöffnung (7'). Die Zu- bzw. Abfuhr der Fluide kann unabhängig voneinander durch die Bohrungen (7) bzw. (7') in der Arbeitselektrode (2) oder in der Gegenelektrode (3) erfolgen. Die jeweils nicht benutzte Bohrung wird verschlossen. Die Bohrungen (9, 9', 10 und 10') erfüllen in diesem einfachsten Aufbau keine Funktion.

Fig. 1b zeigt eine Seitenansicht des aus zwei Schichten aufgebauten elektrochemischen Reaktors (1). Die Bohrungen (7, 7', 9, 9', 10 und 10') sind zur besseren Übersichtlichkeit weggelassen. Wie aus Fig. 1b hervorgeht, ist zwischen den Elektroden eine nicht leitende und chemisch inerte Schicht (8) platziert. In der technischen Realisierung wird mindestens eine der Elektroden auf ihrer Oberfläche mit einer isolierenden, chemisch inerten Beschichtung versehen. Diese isolierende Beschichtung (8) wird in einem zweiten Bearbeitungsschritt gezielt teilweise wieder entfernt, so dass ein strukturierter Verbund aus Elektrode und isolierender Beschichtung resultiert.
Die isolierende Beschichtung erfüllt mehrere Aufgaben: Sie dient als Abstandhalter zwischen den Elektroden und definiert den Reaktionsraum zwischen den Elektrodenoberflächen. Gleichzeitig dient sie als Abdichtung des Reaktionsraumes. Sie ist senkrecht so angeordnet, dass die Elektroden völlig parallel zueinander liegen, also an jeder Stelle der Reaktionszone völlig identische Abstände voneinander haben. Dadurch ist das elektrische Feld völlig homogen. Dies ist besonders wichtig, da die Elektrodenabstände lediglich im μm-Bereich liegen und schon kleine Abweichungen

aus der parallelen Anordnung große negative Effekte nach sich ziehen. Die isolierende Beschichtung fungiert zudem als Isolator zwischen Anode und Kathode und verhindert so Kurzschlüsse. Sie erbringt zudem die Abdichtung des Reaktionsraumes.

Durch die Fixierung der isolierenden Beschichtung auf der Elektrodenoberfläche können im Reaktionsraum Stützen von beliebiger Gestalt positioniert werden. Durch die Form dieser Stützen, z.B. kreis-, stromlinien-, rauten-, quader-, kasten-, stabförmig, eckig oder oval, kann zusätzlich die Strömungsverteilung im Reaktionsraum vorteilhaft beeinflusst werden. Dadurch entstehen laminare Strömungen, die eine enge Verweilzeitverteilung gewährleisten.

Wie in Fig.1b weiterhin zu sehen, sind der Zuleitungskanal (4) und der Sammelkanal (4') mit der isolierenden Beschichtung (8) versehen. Dadurch wird verhindert, dass im Versorgungsbereich (Zu- und Abfuhröffnungen und Verteil- bzw. Sammelvorrichtung) eine Reaktion stattfindet. Unerwünschte Erscheinungen wie ein Energieverlust oder eine inhomogene Stromdichtenverteilung und dementsprechend das Entstehen von unerwünschten Nebenprodukten werden dadurch vermieden. Der Teil (8) der isolierenden Beschichtung stellt die Einfassung des Reaktionsraumes dar. Der Teil (6) der isolierenden Beschichtung steht schematisch für die Stützen im Reaktionsraum (5). Fig. 1b zeigt auch die Stromversorgung (17) des Reaktors.

Fig. 2a zeigt den Aufbau eines elektrochemischen Reaktors (21) mit einer Arbeitselektrode (2) einer Gegenelektrode (3) und einem zusätzlichen Wärmetauscher (12), bestehend aus einer strukturierten Platte. Die Zufuhr des Temperiermediums erfolgt über eine Bohrung (10). Das Temperiermedium verteilt sich anschließend über den gesamten Wärmeaustauschraum (13) und wird durch eine Bohrung (10') wieder abgeführt. Das Temperiermedium kann auch durch Bohrung 10' zu- und durch Bohrung 10 abgeführt werden, also wahlweise im Gegenstrom oder im Gleichstrom zum Reaktionsmedium geführt werden. Die Stützen (14) entstehen durch Bearbeitung der Wärmetauscherplatte und bestehen daher in der Regel aus dem gleichen Material wie dieser. Im Gegensatz dazu bestehen die Stützen (6) auf der Elektrode aus einem von dem Elektrodenmaterial in der Regel verschiedenen Beschichtungsmaterial. Der Wärmetauscher (12) kann den in Fig. 1a beschriebenen Aufbau auf zweierlei Art ergänzen: Er kann unterhalb der Arbeitselektrode oder auf der unstrukturierten Gegenelektrode angebracht werden, dann mit der strukturierten Seite nach unten.

Auch können auf beiden Seiten der Elektroden, also oberhalb und unterhalb, Wärmetauscher angebracht werden. Die Entscheidung darüber, welcher Aufbau günstiger ist, kann in Abhängigkeit von der Wärmeleitfähigkeit der jeweils verwendeten Elektrodenmaterialien und/oder der Wärmetönung der durchzuführenden elektrochemischen Umsetzung ausfallen. In jedem Fall ist die gesamte Fläche der Reaktionszone vom Wärmetauscher abgedeckt.

Dieses wird aus Fig. 2b deutlich, die eine Seitenansicht des Reaktors (21), bestehend aus einer mit einer isolierenden Beschichtung (8) versehenen Arbeitselektrode (2), einer Gegenelektrode (3) und einem Wärmetauscher (12), zeigt. Die Zu- und Abfuhr der Reaktionsmischung erfolgt über die Bohrungen (7 bzw. 7') durch die Gegenelektrode (3). Die Versorgung und Entsorgung des Temperiermediums erfolgt hier über die Bohrungen (10 bzw. 10') durch die beschichtete und strukturierte Arbeitselektrode (2) und die unstrukturierte Gegenelektrode (3) hindurch, kann aber auch durch die Rückseite des Wärmetauschers erfolgen. Die nicht benutzten Bohrungen werden jeweils verschlossen. Die Bohrungen (9 und 9') finden in diesem Aufbau keine Verwendung. Die Fluidführung im Wärmetauscher kann, wie in Fig. 2b durch Pfeile angedeutet, im Gleichstrom zur Reaktionslösung erfolgen, aber auch im Gegenstrom erfolgen.

Fig.3 zeigt den Aufbau eines elektrochemischen Mikroreaktors mit getrenntem Anodenraum und Kathodenraum, bestehend aus fünf Schichten, die aber aus lediglich drei verschiedenen Funktionseinheiten gebildet werden: Eine beschichtete und strukturierte Arbeitselektrode (2) (Anode) und eine beschichtete und strukturierte Gegenelektrode (2') (Kathode) werden durch ein gegebenenfalls mit Bohrungen versehenes Diaphragma (15) getrennt. Die Anode (2) und die Kathode (2') sind dabei identisch gearbeitet, aber die Kathode (2') ist in diesem Aufbau spiegelbildlich zur Anode, d.h. mit der strukturierten Seite nach unten gekehrt. So entstehen zwei Reaktionsräume, ein Anodenraum und ein Kathodenraum. Durch die spezielle, punktsymmetrische Strukturierung und die versetzen Bohrungen durch die identische gearbeiteten Platten (2 bzw. 2') können Anodenraum und Kathodenraum nun getrennt und unabhängig voneinander mit Elektrolyten (Anolyt bzw. Katholyt) versorgt werden: Die Zufuhr des Anolyten erfolgt in dem in Fig.3 dargestellten Aufbau über die Bohrungen (7), dessen Abfuhr über die Bohrungen (7'). Die Zufuhr des Katholyten erfolgt hingegen über die Bohrungen (9), dessen Abfuhr über die Bohrungen (9'). Die Versorgung und die Entsorgung der Elektrolyten kann, unabhängig voneinander, durch die entsprechenden Bohrungen des Wärmetauschers (12) oder durch die entsprechenden Bohrungen des Wärmetauschers (12') sowie den entsprechenden Bohrungen in den anderen Schichten erfolgen. Die nicht genutzten Bohrungen werden jeweils verschlossen. Die Zu- und Abfuhr des Temperiermediums für den Wärmetauscher (12) kann über die Bohrungen (11) bzw. (11') des Wärmetauschers (12) oder über die Bohrungen (11 bzw. 11') des Wärmetauschers (12') erfolgen. Die Fluidführung des Wärmetauschers (12) erfolgt in diesem Beispiel im Kreuzstrom zu der Führung der Reaktionslösung. Die Zu- und Abfuhr des Temperiermediums für den Wärmetauscher (12') kann, unabhängig von der Zu- und Abfuhr des Temperiermediums für den Wärmetauscher (12), über die Bohrungen (10) bzw. (10') des Wärmetauschers (12) oder über die Bohrungen (10 bzw. 10') des Wärmetauschers (12') erfolgen. In diesem Fall können die Bohrungen beider Wärmetauscher über die entsprechenden Bohrungen der Elektroden (2 und 2') und des Diaphragmas (15) verbunden werden und es genügt ein Zufluss

und ein Abfluss. Die Wärmetauscher (12) und (12') können prinzipiell im Gleich-, Gegen- oder Kreuzstrom betrieben werden.

Wird ein Diaphragma (15) ohne die Bohrungen (10) und (10') bzw. (11) und (11')verwendet, erfolgt die Zu- und Abfuhr des Temperiermediums für die Wärmetauscher (12) und (12') über die Bohrungen (10) und (10') bzw. (11) und (11') des gleichen Wärmetauschers. Die nicht benutzten Bohrungen werden verschlossen.

Ein Verfahren zur Herstellung eines im erfindungsgemäßen Verfahren verwendeten Mikroreaktors, umfasst die folgenden Schritte:

(a) Einbringung von Ausnehmungen auf der Oberfläche des Elektrodenmaterials, so dass Verteilungs- bzw. Sammelstrukturen entstehen.
(b) Erstellen einer Maske, die Aussparungen an denjenigen Stellen aufweist, an denen die Elektrodenoberfläche mit Isolationsmaterial beschichtet werden soll, anschließend festes Aufbringen des Isolationsmaterials durch die Maske auf mindestens eine Elektrodenoberfläche und Entfernen der Maske oder, alternativ, festes Aufbringen einer flächendeckenden Isolationsschicht auf mindestens eine Elektrodenoberfläche und partielles Entfernen des isolierenden Beschichtungsmaterials. Die so entstehenden Verteilungs- bzw. Sammelstrukturen bilden zusammen mit den freien Oberflächen der Elektroden Räume aus, in denen die Reaktanten zugeführt, verteilt, einem elektrischen Feld ausgesetzt und die Produkte gesammelt und abgeführt werden können.
(c) Zusammenfügen der Elektroden und gegebenenfalls Wärmetauscherelemente und/oder Trennwände; und
(d) Anschluss der Stromzufuhr und gegebenenfalls Sensoren.

Die Strukturierung der Oberfläche einer oder mehrerer Elektroden erfolgt in Schritt (a) vorzugsweise durch mikrotechnische Prozesse:

Mikrofunkenerosion, Nassätzen, Verfahren zu elektrolytischen Ätzen wie Elektropolierung, Mikrosenkerosion, ECM, galvanische Abscheidung und Abformung, chemische und elektrochemische Beschichtungs- und Abscheidungsverfahren, Laserschneiden und -strukturieren.

In Schritt (b) wird gegebenenfalls eine zuvor gefertigte Maske aufgebracht und die gesamte Elektrodenoberfläche, einschließlich der in Schritt (a) ausgebildeten Bereiche, beschichtet. Die strukturierten Bereiche werden dabei genauso dick beschichtet wie die unstrukturierte Plattenoberfläche.

Als Materialien für die isolierende Beschichtung eignen sich nichtleitende Kunststoffe, die auch bei erhöhten Temperaturen gegen aggressive Chemikalien oder Lösungsmittel inert sind. Bevorzugt sind Polypropylen, Polyimide und fluorierte Kohlenwasserstoffe wie z.B. PTFE, PVDF, PCTFE, PFA und FEP, insbesondere Polytetrafluoroethylen.

Der Prozess des Beschichtens läuft in folgenden Teilschritten ab:

1. Thermisches Entfetten der Elektrodenoberfläche, gegebenenfalls Aufbringen einer Maske
2. Anrauen der Oberfläche (Sandstrahlen)
3. Auftragen des Beschichtungsmaterials im Sprühverfahren (Für dickere Schichten mehrmaliges, schichtweises Aufsprühen im Sprühverfahren oder einmaliges Aufbringen mittels Laminationsverfahren)
4. Trocknung (evtl. Aufbringen weiterer Schichten und anschl. Trocknung)
5. Sintern
6. Langsames Abkühlen

Alternativ kann die Beschichtung in folgenden Teilschritten erfolgen:

1. Thermisches Entfetten der Elektrodenoberfläche, gegebenenfalls Aufbringen einer Maske
2. Grundierung
3. Elektrostatisches Auftragen von Lackpulver
4. Trocknung (evtl. Aufbringen weiterer Schichten und anschl. Trocknung)
5. Sintern bei 390-400°C
6. Langsames Abkühlen

In Schritt (c) werden diejenigen Stellen auf der Oberfläche freigelegt, die als Elektrode fungieren sollen. Der auf der Plattenoberfläche verbleibende Teil der Beschichtung dient gleichzeitig als Abstandhalter, Abdichtung und als Fluidführung, definiert also den Reaktionsraum.

Durch diese Art der Fertigung können in den Zu- und Ablaufrinnen keine unerwünschten Reaktionen ablaufen.

Beim Prozess des partiellen Entfernens der isolierenden Beschichtung läuft bevorzugt in folgenden Schritten

ab:

1. Erstellung einer Maske
2. Verdampfen von Teilen der isolierenden Beschichtung mittels LASER, dessen Frequenz auf das Material abgestimmt ist, entsprechend der Vorgaben der Maske und damit Freilegung der Elektrodenoberfläche

Das partielle Entfernen der isolierenden Beschichtung auf der Elektrodenoberfläche kann auch durch Ätzen oder Stanzen erfolgen.

In Schritt (d) werden die einzelnen Lagen derart übereinander gestapelt, so dass eine völlig flüssigkeitsdichte Verbindung zwischen den Lagen mit Fluidführungen und Trennwänden entsteht. Der Vorteil dieses Verfahrens besteht in der extrem einfachen und damit kostengünstigen Ver- und Bearbeitung der Einheiten.

Um sich wechselnden Erfordernissen anpassen zu können, gibt es auch unterschiedlich große Gehäuse mit Gehäusedeckel, um eine unterschiedliche Anzahl von Funktionsmodulen aufnehmen zu können. Diese Auswahl aus möglichen Komponenten ermöglicht es zum einen, die Kapazität des Gesamtreaktors durch einfache Stapelung von identischen Einheiten zu erhöhen, ohne die Einzelreaktoren zu vergrößern. Zum anderen können gegebenenfalls einzelne Komponenten ausgetauscht werden, wenn deren Funktion als nicht optimal erkannt wird, oder wenn ein Fehler auftreten sollte.

Ein Modular aufgebautes System zur Herstellung eines im erfindungsgemäßen Verfahren verwendeten Mikroreaktors zur Durchführung chemischer Reaktionen, umfasst folgende Funktionsmodule:

a. einen Satz von zwei oder mehreren Elektroden, wobei die Oberfläche mindestens einer Elektrode fest mit einer definiert ausgestalteten elektrisch isolierenden Beschichtung (8) verbunden ist;
b. gegebenenfalls einen Satz von einem oder mehreren Platten oder Schichten, die als Wärmetauscher oder Peltierelement eingesetzt werden können;
c. gegebenenfalls eine oder mehrere Platten, die als Trennwände eingesetzt werden können;
d. elektrische Anschlüsse;
e. Zu- und Ableitungen für Reaktanten, Produkte und Wärmetauschermedien;
f. gegebenenfalls eine oder mehrere Vorrichtungen, in der die einzelnen Elektroden, Platten oder Schichten passgenau, in unterschiedlichen, geeigneten Reihenfolgen gestapelt werden können; und
g. Vorrichtungen zum Befestigen der Elektroden, Platten oder Schichten.

Aufgrund eines solchen Modular aufgebauten Systems ist der Anwender in der Lage, den Mikroreaktor seinen Bedürfnissen entsprechend anzupassen.

Extrem exotherme Reaktionen lassen sich zum Beispiel durch den Einsatz mehrerer hintereinandergeschalteter Wärmeaustauschermodule besser beherrschen. Langsame Reaktionen können zum Beispiel durch den Einbau weiterer Funktionsmodule mit Verweil- und/oder Temperierfunktion optimiert werden.

Insgesamt wird mit der Erfindung ein modular aufgebautes, miniaturisiertes Reaktionssystem für elektrochemische Reaktionen zur Verfügung gestellt, das folgende Vorteile aufweist:

- Durch eine auf den Elektrodenoberflächen aufgebrachte und mit Strukturen versehenen Schicht werden die Elektroden in einem exakt definierten und konstanten Abstand parallel zueinander angeordnet. Dadurch können keine Feldinhomogenitäten auftreten, wodurch eine erhöhte Selektivität erreicht wird

- Die strukturierte Schicht dient gleichzeitig als Abstandshalter und als Abdichtung des Reaktionsraums. Es muss also keine weitere Dichtmasse aufgebracht werden

- Durch die Abmessungen und die Form der Abstandhalter wird eine hohe effektive Elektrodenoberfläche und damit eine höhere Raum-Zeit Ausbeute erzielt

- Aufgrund der geringen Elektrodenabstände lassen sich Synthesen auch in schlechtleitenden Elektrolyten durchführen. Aufgrund der im Extremfall bis auf den Elektrodenabstand reduzierten Diffusionsschicht werden diffusionskontrollierte Reaktionen beschleunigt. Das durch den kleinen Elektrodenabstand bedingte geringe Volumen des Reaktionsraumes ermöglicht eine effektivere Kontrolle und Steuerung der Temperatur des Reaktionsraums (und dadurch die Unterdrückung von Neben- und Folgereaktionen)

- Die punktsymmetrische Versetzung der Ein- und Auslassbohrungen an den Enden des Ein- und Auslasssammelkanals ermöglicht es, identisch gefertigte Platten durch Klappen um 180° die Bohrungen so übereinander zu stapeln, dass in einem Reaktor mit mindestens zwei Reaktionskammern verschiedene Reaktionslösungen durchgeleitet werden können (Fig.3). Mit 'Klappen' , soll hier und im folgenden eine Drehung um die Längsachse bezeichnet werden. Beim Stapeln zweier um 90° in der Ebene gedrehter, identisch gefertigter Platten kommen diese so übereinander zu liegen, dass in einem Reaktor mit mindestens zwei Reaktionskammern verschiedene Reaktionslösungen durchgeleitet werden können. Auch die Wärmetauscherplatten sind punktsymmetrisch aufgebaut und können um 90° in der Ebene verdreht in einen Plattenstapel eingefügt werden, so dass sie gegebenenfalls mit verschieden temperierten Temperiermedien beschickt werden können. Die Bohrungen zur Zu- bzw. Abfuhr der Rektions- bzw. der Temperiermedien in den gestapelten Funktionseinheiten kommen aber stets so übereinander zu liegen, dass die Zufuhr bzw. Abfuhr dieser Medien jeweils über lediglich eine Zu- bzw. Ableitung erfolgen kann. Durch die spezielle Geometrie der einzelnen Platten kann durch deren Kombination so aus nur wenigen Funktionsmodulen eine große Anzahl verschiedener Reaktoren zusammengesetzt werden

- Durch Aufbringen einer Beschichtung auf der Elektrodenoberfläche und deren anschließende gezielter Entfernung können im Reaktionsraum Abstandhalter von weit variierbarer Form geschaffen werden

- Die Möglichkeit einer breiten Variierung der Abstandhalter in deren Form und Anordnung führt zur Vermeidung einer Verstopfungsgefahr, wie sie bei Kanälen auftritt

- Durch das Aufbringen einer fixierten Beschichtung entfällt die schwierige und zeitaufwendige Positionierung im Vergleich einer Anordnung, bei der zwischen zwei Elektroden eine dritte Schicht als Isolator, Abstandhalter und zur Ausbildung von Reaktionsräumen eingebracht wird

- Da Medien und Strom nur von der Ober- bzw. Unterseite des Plattenstapels, nicht aber von der Seite zugeführt werden, können sehr dünne Elektroden verwendet werden

Im erfindungsgemäßen Verfahren zur Durchführung elektrochemischer Reaktionen, leitet man ein oder mehrere chemische Reaktanten, insbesondere elektroaktive organische Verbindungen, in fluider Form in einen erfindungsgemäßen Mikroreaktor und setzt diese im Bereich des zwischen den beiden Elektroden (2, 3) gebildeten Raumes (5), in der die isolierende Beschichtung (8) teilweise gezielt entfernt ist, einem elektrischen Feld aus.

Der Begriff "fluide Form" umfasst sowohl Reaktanten, die selbst in einem flüssigen Aggregatszustand vorkommen, als auch Reaktanten, die in einem Gemisch mit einem fluiden Verdünnungsmittel eingesetzt werden. In einer besonders bevorzugten Ausführungsform wird mindestens eine elektroaktive Verbindung, vorzugsweise eine leicht oxidierbare oder reduzierbare organische Verbindung, gegebenenfalls in Gegenwart von mindestens einem vergleichsweise schwer oxidierbaren bzw. reduzierbaren Lösungsmittel in einem erfindungsgemäßen Mikroreaktor einem elektrischen Feld ausgesetzt. Bevorzugte Lösungsmittel sind solche, die gegenüber der eingesetzten Spannung und Stromdichte inert sind, vorzugsweise gegebenenfalls halogenierte aliphatische oder aromatische Kohlenwasserstoffe wie zum Beispiel Hexan, Cyclohexan, Dichlormethan, Tetrachlormethan, Benzol oder Chlorbenzol; oder Ether wie zum Beispiel Diethylether, *tert*-Butylmethylether, Dioxan oder Tetrahydrofuran; Ketone oder Amide wie zum Beispiel Aceton, Methylethylketon, Dimethylformamid oder N-Methylpyrrolidon; oder Alkohole wie zum Beispiel Methanol, Ethanol, Propanol, Isopropanol oder Butanol; oder Acetonitril oder Wasser oder Gemische aus diesen Verdünnungsmitteln.

Um das Verständnis der vorliegenden Erfindung zu erleichtern, werden die nachfolgenden illustrativen Beispiele für mögliche Reaktionstypen dargelegt. Beispiele für erfindungsgemäße Reaktionen sind die Methoxylierung von Furan oder die Reduktion von Aceton zu Pinakol. Die vorliegende Erfindung ist nicht beschränkt auf diese spezifischen Ausführungsformen, sondern umfasst den vollen Umfang der Patentansprüche.

Beispiel 1 - Synthese von 2,5-Dimethoxy-2,5-Dihydrofuran

Konventionell

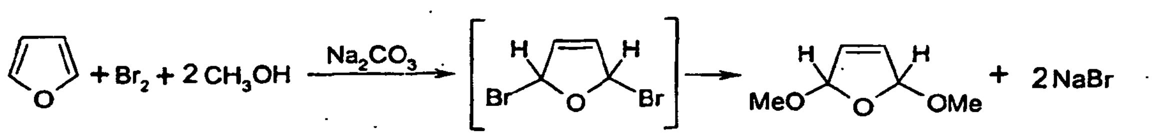

Elektrochemisch:

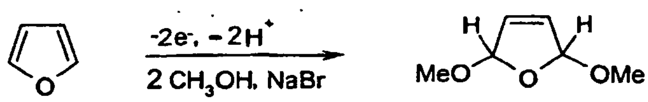


200ml Furan und 5,1g (0,05 mol) NaBr werden in 800ml MeOH gelöst. Die Lösung wird in einem erfindungsgemäßen Mikroreaktor bei einer Temperatur von 5°C, einem Fluss von 1 ml/min und einer Stromdichte von 20,8 A/$dm^2$ anodisch oxidiert. Das Natriumbromid dient dabei als Mediator. Anschließend wird das MeOH abdestilliert. Das bei diesem Prozeß aus dem Rückstand ausfallende NaBr wird durch Filtration zurückgewonnen. Man erhält das Produkt 2,5-Dimethoxy-2,5-Dihydrofuran mit einer Ausbeute von 96%.

| | Elektrochemisch | Elektrochemischer Mikroreaktor |
|---|---|---|
| Stoffausbeute | 85% | 96% |
| Stromausbeute | 80-85% | 92% |
| Energieverbrauch | 2,5 kWh/Kg | 1,76 kWh/Kg |

Beispiel 2 - Reduktion von Aceton zu Butyl-2,3-diol (Pinakol)

Anode:

$$CH_3\text{-}CHOH\text{-}CH_3 \rightarrow CH_3\text{-}CO\text{-}CH_3 + 2H^+ + 2e^-$$

Kathode:

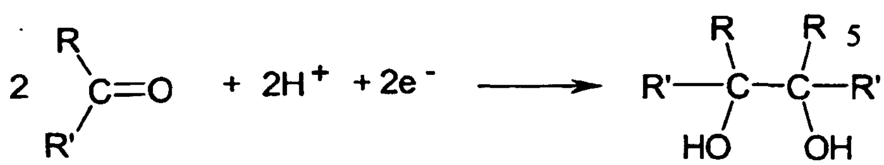

Eine Mischung, bestehend aus 10 Gew.-% Aceton, 79,75 Gew.-% Isopropanol, 10 Gew.-% Wasser und 0,25 Gew.-% Tetrabutylammoniumhexafluorophosphat als Leitsalz wird bei einem Fluss von 10 ml/min, einer Stromdichte von 20,8 A/$dm^2$, einem pH-Wert von 2-3 und einer Temperatur von 20°C durch den erfindungsgemäßen elektrochemischen Mikroreaktor gepumpt. Das an der Anode durch eine Zweielektronenoxidation gebildete Aceton wandert zur Kathode und wird durch eine Einelektronenreduktion zum entsprechenden Radikalanion, welches dimerisiert und unter den sauren Bedingungen zu Pinakol umgesetzt wird. Nach Neutralisation der Reaktionsmischung mit 1 N NaOH wird die Reaktionsmischung eingeengt. Das nach Zufügen von 10 ml Wasser bei 0°C auskristallisierende Pinakol-Hydrat wird mit Eiswasser gewaschen. Die Gesamtausbeute an Pinakol beträgt 87% der Theorie. Die Gesamtstromausbeute beträgt 56%.

**Patentansprüche**

1. Verfahren zur Durchführung elektrochemischer Reaktionen, wobei man ein oder mehrere chemische Reaktanten in fluider Form in einen Mikroreaktor für elektrochemische Umsetzungen einleitet, welcher mindestens zwei planparallel zueinander angeordnete Elektroden (2, 3) aufweist, wobei mindestens eine Elektrode mit einer definiert ausgestalteten, fest mit der Elektrodenoberfläche verbundenen Isolationsschicht versehen ist, und durch gezieltes Auftragen dieser Isolationsschicht über eine Maske auf mindestens einer dieser Elektrodenoberflächen oder durch

gezieltes partielles Entfernen von Teilen einer zuvor flächendeckend auf mindestens einer dieser Elektrodenoberfläche aufgebrachten und mit ihr fest verbundenen Isolationsschicht mindestens ein Reaktionsraum (5) definiert wird, **dadurch gekennzeichnet, dass** man die ein oder mehrere chemische Reaktanten im Bereich des zwischen den beiden Elektroden (2, 3) gebildeten Reaktionsraumes (5), in der die Isolationsschicht (8) in ihrer ganzen Schichtdicke entfernt ist, einem elektrischen Feld aussetzt.

**2.** Verfahren nach Anspruch 1, **dadurch gekennzeichnet, dass** die Isolationsschicht als Dichtung und/oder als Abstandshalter fungiert.

**3.** Verfahren nach einem der vorangehenden Ansprüche, **dadurch gekennzeichnet, dass** der Mikroreaktor folgende Komponenten umfasst:

(a) mindestens eine Arbeitselektrode (2);
(b) mindestens eine Gegenelektrode (3);
(c) Vorrichtungen zum Zu- und Abführen (4, 4', 7, 7', 9, 9') von Reaktanten und Produkten;
(d) einen durch die Elektrodenoberflächen und Aussparungen in der Isolationsschicht definierten Reaktionsraum.

**4.** Verfahren nach einem der vorangehenden Ansprüche, **dadurch gekennzeichnet, dass** die isolierende Beschichtung (8) der beschichteten Elektrode (2) an einer oder mehreren Stellen (5), die mit den Vorrichtungen (c) in Verbindung stehen, entfernt ist.

**5.** Verfahren nach einem der vorangehenden Ansprüche, **dadurch gekennzeichnet, dass** die beschichtete Elektrode

(i) mindestens eine Rinne (4) zur Verteilung des Eduktes; und
(ii) mindestens eine Rinne (4') zum Sammeln des Produkts; sowie
(iii) mindestens einen die beiden Rinnen (4, 4') verbindenden Reaktionsraum (5) aufweist.

**6.** Verfahren nach einem der vorangehenden Ansprüche, **dadurch gekennzeichnet, dass** die Bereiche (i) und (ii) des Mikroreaktors vollständig mit der Isolationsschicht bedeckt sind und im Bereich (iii) die Oberfläche der Elektrode freigelegt ist.

**7.** Verfahren nach einem der vorangehenden Ansprüche, **dadurch gekennzeichnet, dass** die isolierende Beschichtung im Bereich (iii) des Mikroreaktors so ausgestaltet wird, dass im die Rinnen (4, 4') verbindenden Raum (5) an mehreren Stellen Stützen (6) ausgebildet werden.

**8.** Verfahren nach Anspruch 7, **dadurch gekennzeichnet, dass** die Form der Stützen (6) zur Optimierung der Strömungsverteilung ausgestaltet sind.

**9.** Verfahren nach einem der vorangehenden Ansprüche, **dadurch gekennzeichnet, dass** in dem Mikroreaktor durch eine geeignete Anordnung mehrerer identischer Platten eine Vervielfachung identischer Funktionsräume erreicht wird, wobei diese je nach Bedarf

a) parallel (nebeneinander) oder
b) in Serie (hintereinander) geschaltet werden können.

**10.** Verfahren nach einem der vorangehenden Ansprüche, **dadurch gekennzeichnet, dass** Anoden- und Kathodenraum durch Einbringen einer Trennwand (15) voneinander getrennt sind.

**11.** Verfahren nach einem der vorangehenden Ansprüche, **dadurch gekennzeichnet, dass** in dem Mikroreaktor durch Stapelung um 90° gedrehter und/oder um 180° geklappter, punktsymmetrischer Funktionseinheiten die Ein- und Auslassbohrungen so übereinander zu liegen kommen, dass ein unabhängiger Zu- und Abfluss von je zwei Reaktions- bzw. Temperiermedien erfolgen kann und die Medien wahlweise im Gleich-, Gegen- oder Kreuzstrom betrieben werden können.

## Claims

1. Process for carrying out electrochemical reactions, in which one or more chemical reactants in fluid form are fed into a microreactor for electrochemical reactions which has at least two electrodes (2, 3) arranged plane-parallel to one another, where at least one electrode is provided with an insulation layer of defined shape which is strongly bonded to the electrode surface, and at least one reaction space (5) is defined by specific application of this insulation layer via a mask to at least one of these electrode surfaces or by specific partial removal of parts of an insulation layer previously applied to at least one of these electrode surfaces over the entire area and strongly bonded thereto, **characterized in that** the one or more chemical reactants are subjected to an electric field in the region of the reaction space (5) formed between the two electrodes (2, 3) by removal of the insulation layer (8) in its entire layer thickness.

2. Process according to Claim 1, **characterized in that** the insulation layer functions as seal and/or as spacer.

3. Process according to one of the preceding claims, **characterized in that** the microreactor comprises the following components:

   (a) at least one working electrode (2);
   (b) at least one counterelectrode (3);
   (c) devices for the supply and discharge (4, 4', 7, 7', 9, 9') of reactants and products;
   (d) a reaction space defined by the electrode surfaces and gaps in the insulation layer.

4. Process according to one of the preceding claims, **characterized in that** the insulating coating (8) of the coated electrode (2) has been removed at one or more points (5) that are connected to the devices (c).

5. Process according to one of the preceding claims, **characterized in that** the coated electrode has

   (i) at least one groove (4) for distribution of the starting material; and
   (ii) at least one groove (4') for collection of the product; and
   (iii) at least one reaction space (5) connecting the two grooves (4, 4').

6. Process according to one of the preceding claims, **characterized in that** the regions (i) and (ii) of the microreactor are completely covered by the insulation layer, and the surface of the electrode is bare in the region (iii).

7. Process according to one of the preceding claims, **characterized in that** the insulating coating in the region (iii) of the microreactor can be formed in such a way that connectors (6) are formed at a plurality of points in the space (5) connecting the grooves (4, 4').

8. Process according to Claim 7, **characterized in that** the shape of the connectors (6) is designed for optimization of the flow distribution.

9. Process according to one of the preceding claims, **characterized in that** duplication of identical function spaces is achieved in the microreactor through a suitable arrangement of a plurality of identical plates, where these can, as required, be connected

   a) in parallel (alongside one another) or
   b) in series (one after the other).

10. Process according to one of the preceding claims, **characterized in that** the anode and cathode spaces are separated from one another through the introduction of a partition wall (15).

11. Process according to one of the preceding claims, **characterized in that** the inlet and outlet bores in the microreactor come to lie one above the other, through stacking of point-symmetrical function units rotated by 90° and/or tilted through 180°, in such a way that independent inflow and outflow of two reaction or temperature-control media in each case can take place, and the media can be run in co-, counter- or cross-current, as desired.

## Revendications

1. Procédé pour réaliser des réactions électrochimiques, où un ou plusieurs réactifs chimiques sous forme fluide sont passés dans un microréacteur pour transformations électrochimiques, qui présente au moins deux électrodes (2, 3) disposées parallèlement l'une par rapport à l'autre, où au moins une électrode est munie d'une couche d'isolation reliée solidement à la surface de l'électrode, présentée de manière définie, et par l'application ciblée de cette couche d'isolation par un masque sur au moins une surface des électrodes ou par élimination partielle ciblée de parties d'une couche d'isolation appliquée d'abord de manière couvrante, sur au moins une surface des électrodes et reliée solidement à celle-ci, on définit au moins une chambre de réaction (5), **caractérisé en ce que** l'on impose un champ électrique au un ou plusieurs réactifs chimiques dans la zone de la chambre de réaction (5) formée entre les deux électrodes (2, 3), chambre dans laquelle la couche d'isolation (8) est éliminée sur toute son épaisseur de couche.

2. Procédé selon la revendication 1, **caractérisé en ce que** la couche d'isolation fonctionne comme un matériau d'étanchéité et/ou comme espaceur.

3. Procédé selon l'une quelconque des revendications précédentes, **caractérisé en ce que** le microréacteur comprend les composants suivants :

   (a) au moins une électrode de travail (2) ;
   (b) au moins une contre-électrode (3) ;
   (c) des dispositifs pour introduire et éliminer (4, 4', 7, 7', 9, 9') les réactifs et produits ;
   (d) une chambre de réaction définie par les surfaces d'électrode et aménagements dans la couche d'isolation.

4. Procédé selon l'une quelconque des revendications précédentes, **caractérisé en ce que** le revêtement isolant (8) de l'électrode couverte (2) est éliminé en un ou plusieurs sites (5), qui sont en connexion avec les dispositifs (c).

5. Procédé selon l'une quelconque des revendications précédentes, **caractérisé en ce que** l'électrode couverte présente

   (i) au moins une gouttière (4) pour la distribution des réactifs, et
   (ii) au moins une gouttière (4') pour le rassemblement des produits, ainsi que
   (iii) au moins une chambre de réaction (5) reliant les deux gouttières (4, 4').

6. Procédé selon l'une quelconque des revendications précédentes, **caractérisé en ce que** les zones (i) et (ii) du microréacteur sont complètement couvertes avec la couche d'isolation et dans la zone (iii), la surface de l'électrode est libérée.

7. Procédé selon l'une quelconque des revendications précédentes, **caractérisé en ce que** le revêtement isolant est disposé dans la zone (iii) du microréacteur de sorte que des appuis (6) sont formés en plusieurs sites dans la chambre (5) reliant les gouttières (4, 4').

8. Procédé selon la revendication 7, **caractérisé en ce que** la forme des appuis (6) est choisie pour optimiser la distribution de l'écoulement.

9. Procédé selon l'une quelconque des revendications précédentes, **caractérisé en ce que** dans le microréacteur, on obtient une série de chambres de fonction identique par une disposition appropriée de plusieurs plaques identiques, où celles-ci peuvent être disposées

   a) parallèlement (lune par rapport à l'autre), ou
   b) en série (l'une après l'autre), selon le besoin.

10. Procédé selon l'une quelconque des revendications précédentes, **caractérisé en ce que** les chambres d'anode et de cathode sont séparées l'une de l'autre par introduction d'une paroi de séparation (15).

11. Procédé selon l'une quelconque des revendications précédentes, **caractérisé en ce que** dans le microréacteur, par groupement d'unités de fonction à symétrie ponctuelle, tournées de 90° et/ou basculées de 180°, les forages d'entrée et de sortie sont disposés l'un par rapport à l'autre de sorte qu'une entrée et une sortie indépendantes

peuvent être réalisées, depuis chaque fois deux milieux tempérés de réaction et respectivement, et les milieux peuvent être mis en mouvement selon des courants de sens identiques, opposés ou croisés.

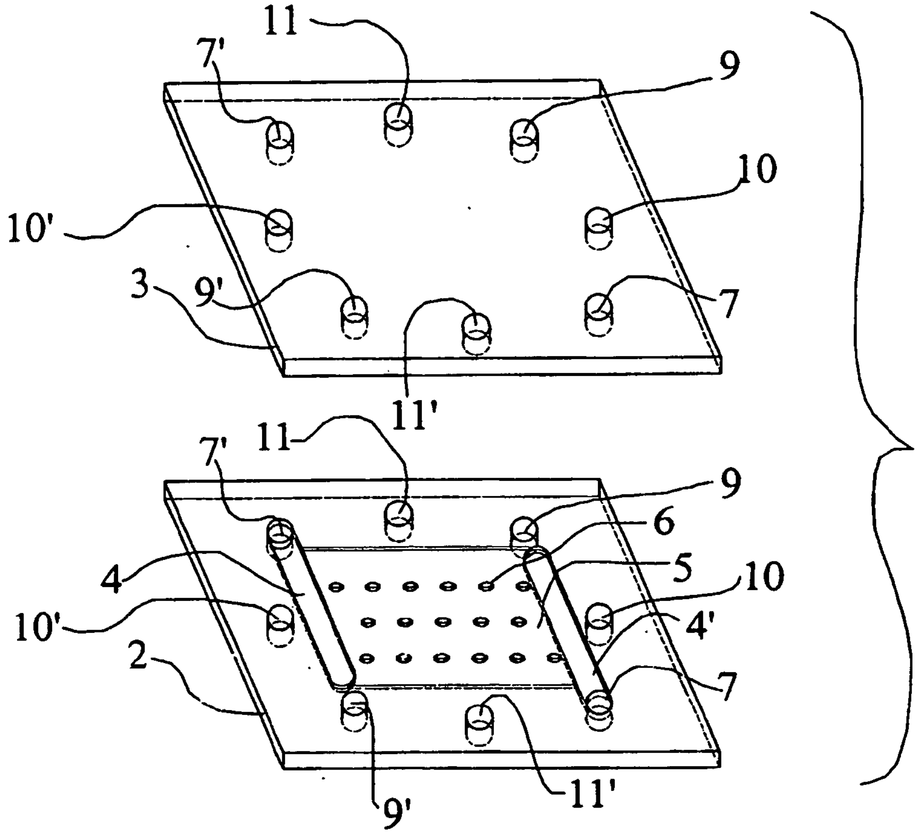


Fig. 1a

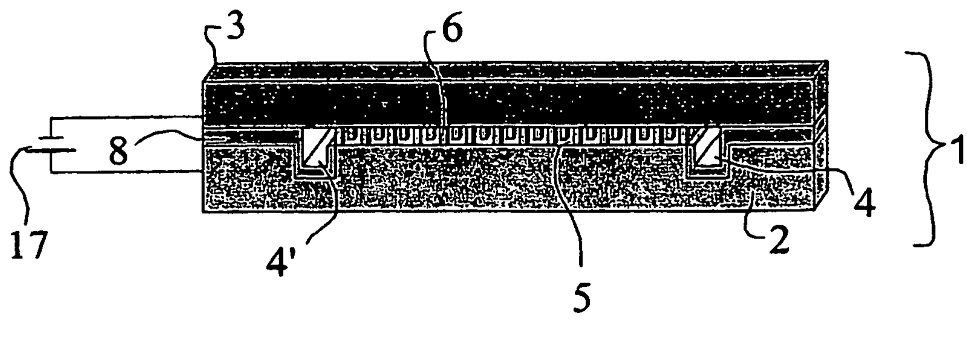


Fig. 1b

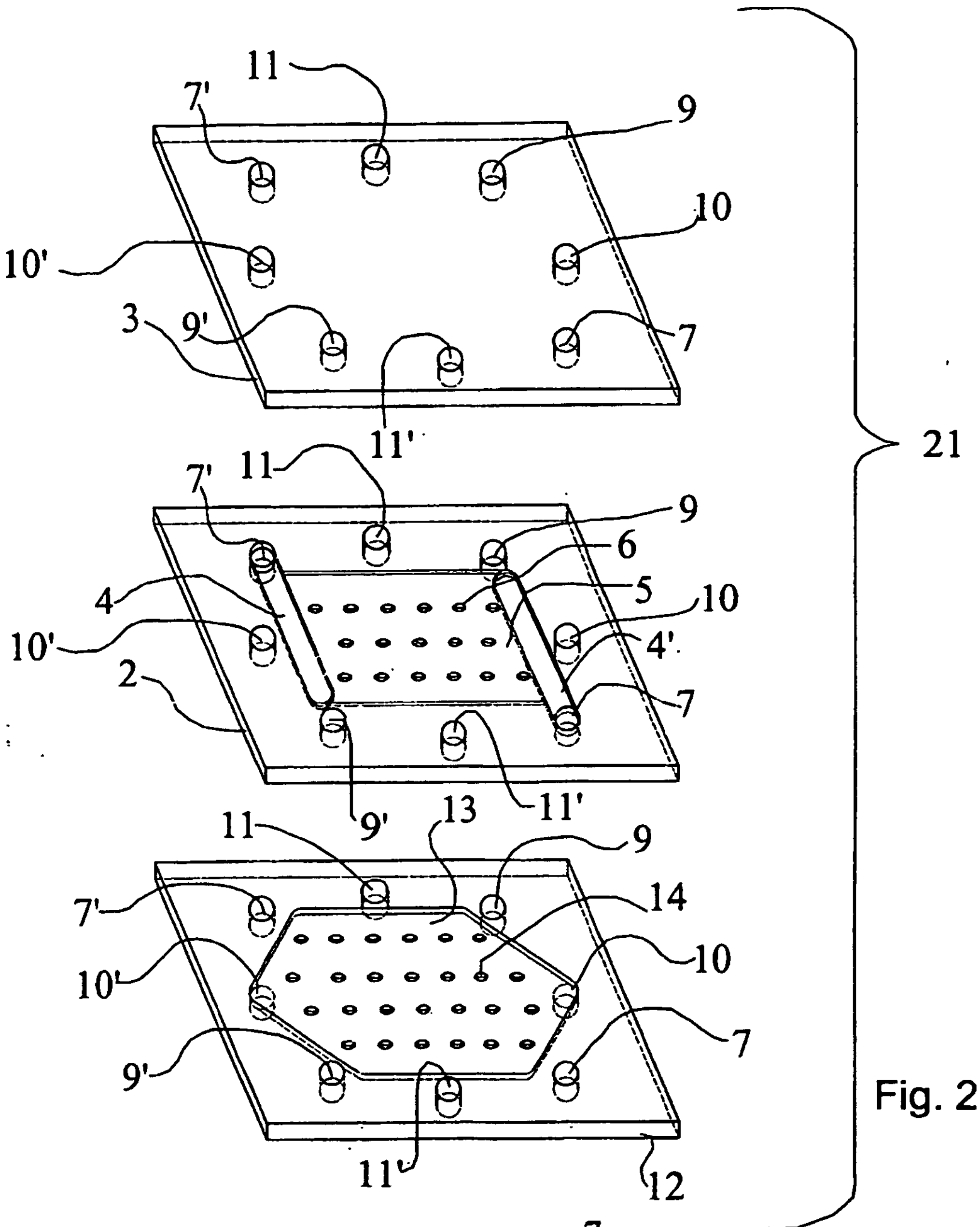
11
7'
9
10
10'
3
9'
7
11'
21
11
7'
9
6
4
5
10
10'
4'
2
7
9'
11'
11
13
9
7'
14
10'
10
7
9'
11'
12

Fig. 2a

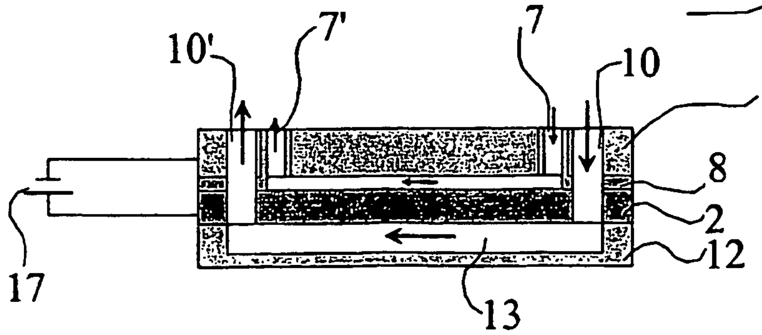
10'
7'
7
10
3
8
2
12
17
13

Fig. 2b

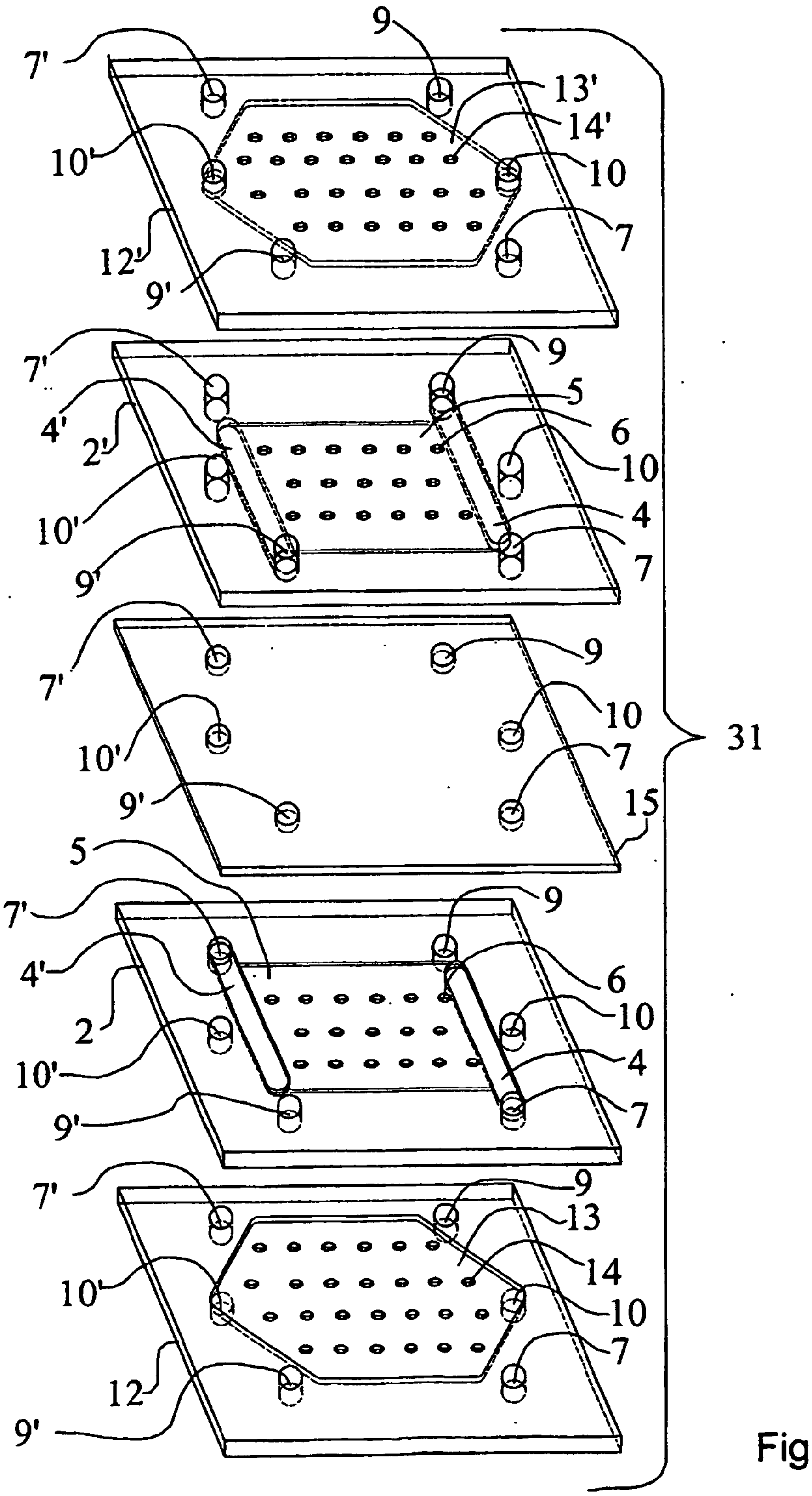
9
7'
13'
14'
10'
10
12'
7
9'
7'
9
5
4'
6
2'
10
10'
4
9'
7
7'
9
10'
10
31
7
9'
15
5
7'
9
4'
6
2
10
10'
4
9'
7
7'
9
13
14
10'
10
7
12
9'

Fig. 3